# FASCICULE DE BREVET EUROPEEN

(11) **EP 0 598 651 B1**
(45) Date de publication et mention de la délivrance du brevet: **07.01.1998**
(21) Numéro de dépôt: 93402763.2
(22) Date de dépôt: 15.11.1993
(51) Int. Cl.: H04B 10/18

(54) **Système de transmission optique, notamment pour réseau câblé de vidéocommunication**
Optisches Übertragungssystem, insbesondere für ein Videokommunikationskabelnetzwerk
Optical transmission system, particularly for a video communication cable network

(30) Priorité: 17.11.1992 FR 9213782
(43) Date de publication de la demande: 25.05.1994
(73) Titulaire: ALCATEL ALSTHOM COMPAGNIE GENERALE D'ELECTRICITE, 75008 Paris (FR)
(72) Inventeur: Hajj, Mohamed, F-78110 le Vesinet (FR); Cretin, Yves, F-92420 Vaucresson (FR)
(74) Mandataire: El Manouni, Josiane

(56) Documents cités:
- EP-A- 0 504 834
- JOURNAL OF LIGHTWAVE TECHNOLOGY. vol. 9, no. 9 , Septembre 1991 , NEW YORK US pages 1145 - 1155 T.SUGIE 'Transmission Limitations of CPFSK Coherent Lightwave Systems Due to Stimulated Brillouin Scattering in Optical Fiber'
- IEEE PHOTONICS TECHNOLOGY LETTERS vol. 4, no. 3 , Mars 1992 , NEW YORK US pages 287 - 289 X.P.MAO ET AL 'Brillouin Scattering in Externally Modulated Lightwave AM-VSB CATV Transmission Systems'
- PATENT ABSTRACTS OF JAPAN vol. 16, no. 508 (E-1282)20 Octobre 1992 & JP-A-04 188 686 (FUJITSU)

## Description

La présente invention concerne la transmission d'informations sur une liaison optique.

La présente invention concerne plus particulièrement un système de transmission d'informations, analogiques ou numériques, sur une liaison optique, dans lequel une forte puissance optique d'émission est à coupler dans ladite liaison, notamment du fait de l'utilisation, à l'émission, de moyens d'amplification optique.

La présente invention s'applique ainsi notamment aux réseaux de transmission du type point-à-multipoint, tels que les réseaux câblés de vidéocommunication par exemple, permettant une diffusion de programmes de télévision d'une station dite centrale vers un ensemble de stations dites distantes.

Le couplage d'une forte puissance optique d'émission dans une liaison par fibre optique soulève un problème technique qui est lié à l'effet Brillouin et qui consiste dans le fait que lorsque cette puissance optique atteint un certain seuil, dit seuil de Brillouin, fonction des caractéristiques de la fibre et de la longueur de la liaison, il se produit, au couplage de cette puissance optique à l'intérieur de cette fibre, des réflexions qui entraînent une dégradation de la qualité de transmission à l'intérieur du système de transmission considéré, se traduisant par l'introduction d'affaiblissements, de déformations et de perturbations supplémentaires sur les signaux transmis.

Le document EP-A-0 504 834 décrit un système de transmission sur une liaison optique, comportant des moyens pour moduler l'intensité d'une porteuse optique par des données à transmettre, et comportant en outre des moyens pour moduler la fréquence de la porteuse optique, de façon à éviter, ou à limiter, les phénomènes de dégradation de la qualité de transmission liés à l'effet Brillouin.

Le document Journal of Lightwave Technology, vol 7, no 1, January 1989, New York, US, page 171-174, E. LICHTMAN et al : "Stimulated Brillouin scattering Excited by a Modulated Pump Wave in single mode fibers" enseigne que l'effet Brillouin est minimisé quand le taux de modulation de l'intensité de la porteuse optique est de 100%.

La présente invention a pour but de proposer des moyens pour modifier le taux de modulation de l'intensité de la porteuse modulée, de façon à réduire les phénomènes de dégradation de la qualité de transmission liés à l'effet Brillouin.

La présente invention a pour objet un système de transmission sur une liaison optique, par modulation d'une porteuse optique, comportant des moyens pour augmenter le taux de modulation de l'intensité de la porteuse optique s'il apparaît des phénomènes de dégradation de la qualité de transmission liés à l'effet Brillouin, **caractérisé** en ce que lesdits moyens pour augmenter le taux de modulation de l'intensité de la porteuse optique comportent des moyens dits de détection, pour détecter une baisse du taux de modulation de l'intensité de la porteuse optique, et des moyens pour augmenter ce taux de modulation de l'intensité, en réponse à une telle détection.

D'autres objets et caractéristiques de la présente invention apparaîtront à la lecture de la description suivante d'exemples de réalisation, donnés à titre d'exemple pour l'application indiquée ci-dessus aux réseaux câblés de vidéocommunication, ladite description étant faite en relation avec les dessins ci-annexés dans lesquels:
- la figure 1 illustre un premier exemple de réalisation d'un système de transmission suivant l'invention,
- la figure 2 illustre un deuxième exemple de réalisation d'un système de transmission suivant l'invention,
- la figure 3 illustre un troisième exemple de réalisation d'un système de transmission suivant l'invention,
- la figure 4 illustre un quatrième exemple de réalisation d'un système de transmission suivant l'invention.

Dans l'exemple d'application considéré à un réseau câblé de vidéocommunication, la porteuse optique est modulée en intensité par un signal de modulation qui est lui-même un multiplex fréquentiel comportant une pluralité de porteuses, dites utiles, modulées respectivement par différents signaux de télévision à diffuser simultanément sur ce réseau (en l'occurrence suivant une modulation dite d'amplitude à bande latérale résiduelle).

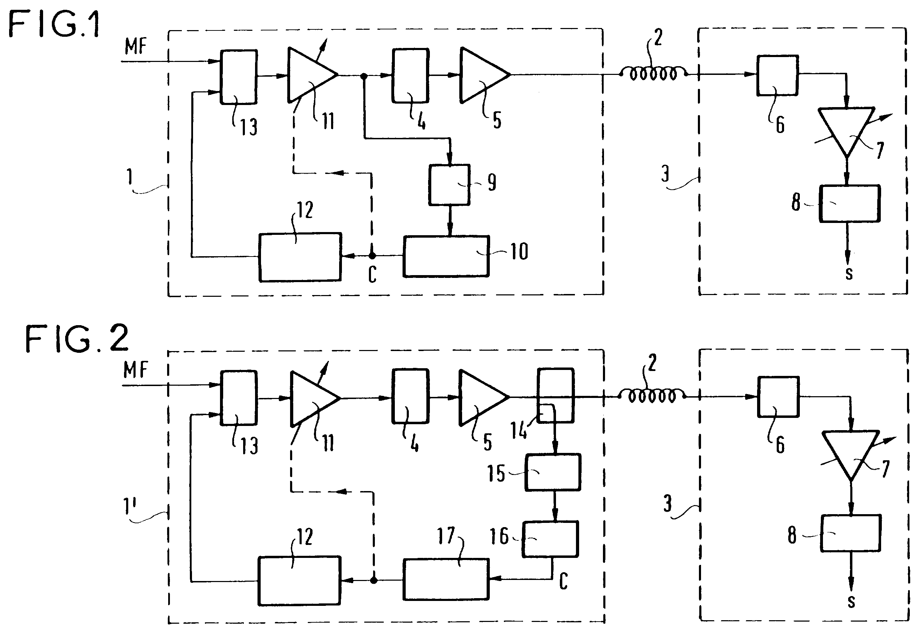

Dans cet exemple d'application, un système de transmission entre la station centrale et une station distante du réseau considéré comporte, comme illustré sur la figure 1:
- un équipement dit d'extrémité-émission 1, localisé dans la station centrale,
- une liaison par fibre optique 2,
- un équipement dit d'extrémité-réception 3, localisé dans la station distante considérée.

L'équipement d'extrémité-émission 1 reçoit un multiplex fréquentiel incident, MF, comportant une pluralité de porteuses utiles, en nombre égal à n, avec n entier inférieur ou égal à N (où N désigne le nombre maximum de porteuses utiles transmissibles sur le réseau considéré).

L'équipement d'extrémité-émission 1 comporte un moyen de transduction électrique-optique, 4, qui reçoit le multiplex fréquentiel incident MF, après traitement de ce dernier d'une façon qui sera décrite ci-après, et qui fournit un signal optique constitué par une porteuse optique modulée par le multiplex fréquentiel ainsi traité, et un amplificateur optique, 5, qui reçoit le signal optique issu du moyen de transduction électrique-optique 4, et qui fournit le signal optique à coupler à l'intérieur de la fibre optique 2.

L'équipement d'extrémité-réception, 3, comporte un moyen de transduction optique-électrique, 6, dont l'entrée est couplée à la liaison optique 2, et qui restitue un signal électrique correspondant audit multiplex fréquentiel, un amplificateur, 7, à gain réglable en vue de compenser une éventuelle inadaptation du gain de l'amplificateur optique d'émission, 5, à la longueur de la liaison optique 2 reliant la station centrale de ce réseau à la station distante considérée de ce réseau, et des moyens 8 de traitement en vue d'extraire du multiplex ainsi reçu un signal de télévision particulier, noté s, sélectionné par la station distante considérée.

Du fait de l'utilisation, à l'émission, de l'amplificateur optique 5, la puissance optique à coupler dans la fibre 2 est relativement forte, auquel cas, suivant la situation de cette puissance optique par rapport à la puissance dite de seuil de l'effet Brillouin, les phénomènes rappelés plus haut de dégradation de la qualité de transmission sur ce réseau sont susceptibles de se produire.

Ainsi que l'a observé la demanderesse, ces phénomènes apparaissent, dans cette application, lorsque le nombre de porteuses utiles du multiplex fréquentiel incident est insuffisant, notamment à la mise en service du réseau (où ces porteuses utiles sont introduites progressivement), ou du fait d'une diminution momentanée du nombre de programmes de télévision diffusés sur ce réseau (en particulier la nuit).

Le demanderesse a en outre observé que lorsque le nombre n de porteuses utiles atteint, ou dépasse, une valeur limite déterminée, no, ou plus généralement lorsque le taux de modulation de l'intensité de la porteuse optique atteint, ou dépasse, une valeur limite déterminée, ces phénomènes disparaissent.

Suivant l'invention, un traitement préalable du multiplex fréquentiel incident est donc réalisé, comme indiqué plus haut, ce traitement préalable intervenant sur détection de la condition n < no, ou de toute autre condition équivalente, et pouvant consister par exemple en une adjonction, audit multiplex, d'une ou de plusieurs porteuses auxilaires, ou en une amplification dudit multiplex, le résultat recherché étant dans tous les cas une augmentation du taux de modulation de l'intensité de la porteuse optique.

L'équipement d'extrémité-émission 1 comporte à cette fin, dans l'exemple de réalisation illustré sur la figure 1:
- des moyens pour détecter si le nombre n de porteuses utiles du multiplex fréquentiel incident est inférieur à ladite valeur limite prédéterminée, no,
- des moyens pour augmenter le taux de modulation de l'intensité de la porteuse optique, en réponse à une telle détection, de façon à éviter, ou le cas échéant seulement limiter, les phénomènes de dégradation de qualité de transmission liés à l'effet Brillouin.

Les moyens pour détecter si le nombre n de porteuses utiles du multiplex fréquentiel incident est inférieur à la valeur limite prédéterminée no comportent, à titre d'exemple, un élément 9 appelé communément scrutateur, permettant de compter le nombre n de porteuses utiles du multiplex incident, et un comparateur 10 permettant de comparer cette valeur n à la valeur limite no.

A titre d'exemple, correspondant au mode de réalisation illustré sur la figure 1, ce comparateur fait partie intégrante d'un microprocesseur déjà présent, ainsi que le scrutateur 9, dans un tel réseau câblé de vidéocommunication, pour mettre en oeuvre des tâches de gestion de ce réseau. En l'occurrence ce microprocesseur sera apte à fournir un ordre de commande particulier, noté C, actif dans le cas où la valeur n sera détectée inférieure à la valeur no.

Les moyens pour augmenter le taux de modulation de l'intensité de la porteuse optique en réponse à une telle détection peuvent comporter par exemple un amplificateur 11 à gain réglable qui reçoit le multiplex incident et dont le gain est commandé par l'ordre de commande C.

Les moyens pour augmenter le taux de modulation de l'intensité de la porteuse optique en réponse à une telle détection peuvent, suivant un autre exemple, comporter des moyens pour adjoindre une, ou plusieurs, porteuses auxiliaires au multiplex incident, ces moyens comportant en l'occurrence, dans l'exemple illustré sur la figure 1, un générateur de porteuse auxiliaire, 12, et un multiplexeur, 13, recevant d'une part le multiplex incident, d'autre part ladite porteuse auxiliaire.

Les moyens pour augmenter le taux de modulation de l'intensité de la porteuse optique en réponse à une telle détection peuvent aussi comporter en combinaison un amplificateur à gain variable tel que, 11, un générateur de porteuse auxiliaire tel que 12 et un multiplexeur tel que 13.

Pour indiquer ces différentes possibilités pour la réalisation desdits moyens pour augmenter le taux de modulation de l'intensité de la porteuse optique, on a représenté en pointillés sur la figure 1 la commande de gain de l'amplificateur 11 par l'ordre de commande C, l'amplificateur 11 lui-même pouvant être présent dans tous les cas pour assurer un contrôle automatique de gain en vue de compenser d'éventuelles variations de niveau du multiplex incident.

On notera cependant que la réalisation desdits moyens pour augmenter le taux de modulation de l'intensité de la porteuse optique, par adjonction d'une ou plusieurs porteuses auxiliaires au multiplex incident, plutôt que par amplification de ce multiplex, peut avoir comme avantage de s'affranchir d'éventuels problèmes de non linéarités de l'amplificateur réalisant cette amplification du multiplex incident.

On notera en outre que la ou les porteuses auxiliaires, seront avantageusement déterminées de façon à ce que cette ou ces porteuses auxiliaires ainsi que les produits d'intermodulation de cette ou de ces porteuses auxiliaires et des porteuses utiles, tombent en dehors des canaux fréquentiels occupés par l'ensemble des porteuses utiles modulées transmissibles sur le réseau considéré.

L'équipement d'extrémité-émission, 1', du système de transmission représenté sur la figure 2 comporte, en vue de détecter si le taux de modulation de l'intensité de la porteuse optique est inférieur à une valeur limite prédéterminée:
- des moyens 14 pour prélever une partie, avantageusement faible, de la puissance optique disponible en sortie de l'amplificateur optique 5,
- des moyens 15 de transduction optique-électrique, recevant la puissance optique ainsi prélevée par les moyens 14,
- des moyens 16 de mesure d'une grandeur caractéristique (telle que la valeur moyenne, la valeur efficace ou la valeur crête) du signal électrique issu des moyens 15 de transduction optique-électrique,
- un comparateur 17 pour comparer la valeur mesurée par les moyens de mesure 16 à une valeur limite prédéterminée.

Comme indiqué pour la figure 1, le comparateur 17 peut faire partie intégrante d'un microprocesseur utilisé dans l'équipement d'extrémité-émission du réseau considéré, ce microprocesseur étant alors apte à fournir un ordre de commande particulier, noté également C, actif dans le cas où ladite valeur mesurée sera détectée inférieure à ladite valeur prédéterminée, et utilisé pour augmenter le taux de modulation de l'intensité de la porteuse optique de façon à éviter ou le cas échéant seulement limiter, les phénomènes de dégradation de qualité de transmission liés à l'effet Brillouin.

Les autres éléments de l'équipement d'extrémité-émission 1' du système de transmission représenté sur la figure 2 sont similaires à ceux de l'équipement d'extrémité-émission 1 du système de transmission représenté sur la figure 1 et portent en l'occurrence les mêmes références, soit 4 pour un moyen de transduction électrique-optique, 5 pour un amplificateur optique, 11 pour un amplificateur à gain variable, 12 pour un générateur de porteuse auxiliaire et 13 pour un multiplexeur, les éléments 11 et 12 étant en outre comme sur la figure 1, commandés par l'ordre de commande C.

Le système de transmission représenté sur la figure 2 comporte en outre une liaison optique et un équipement d'extrémité-réception similaires à ceux, 2 et 3, du système de transmission représenté sur la figure 1 et portant en l'occurrence les mêmes références, l'équipement d'extrémité-réception 3 comportant lui-même des éléments similaires à ceux de l'équipement d'extrémité-réception de la figure 1, et portant en l'occurrence les mêmes références, à savoir 6 pour un moyen de transduction optique-électrique, 7 pour un amplificateur à gain réglable, et 8 pour des moyens de traitement.

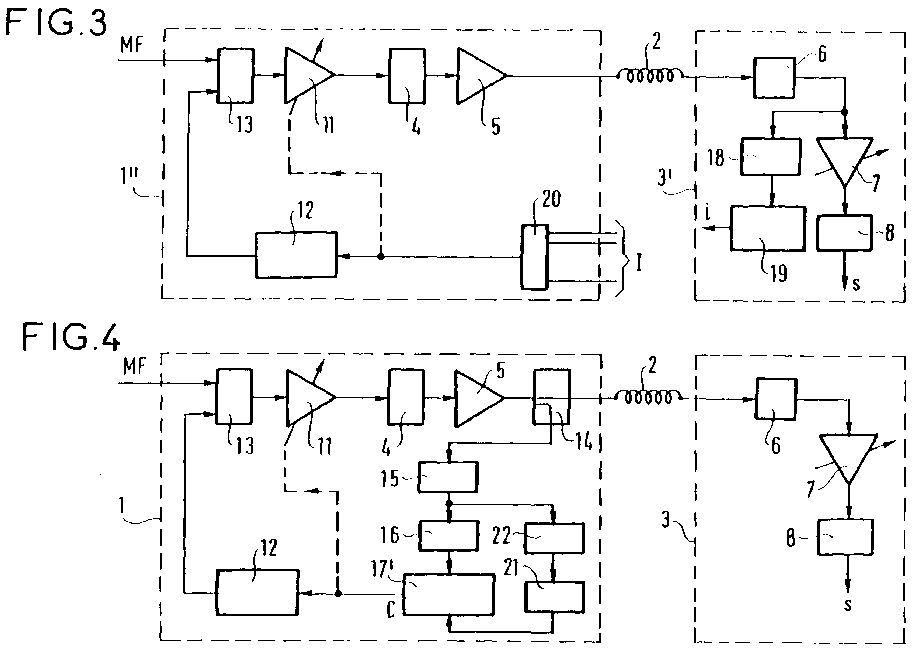

L'équipement d'extrémité-réception, 3', du système de transmission représenté sur la figure 3 comporte, en vue de détecter si le taux de modulation de l'intensité de la porteuse optique est inférieur à une valeur limite prédéterminée:
- des moyens 18 de mesure d'une grandeur caractéristique (telle que la valeur moyenne, la valeur efficace, ou la valeur crête) du signal électrique issu du moyen de transduction optique-électrique 6,
- un comparateur 19 pour comparer la valeur mesurée par les moyens de mesure 18, à une valeur limite prédéterminée.

Le comparateur 19 peut également faire partie intégrante d'un microprocesseur déjà présent dans l'équipement d'extrémité-réception considéré du réseau pour mettre en oeuvre des tâches de gestion de ce réseau.

Dans l'application considérée ici à un réseau de diffusion point-multipoint, ce microprocesseur sera apte à fournir une information particulière, notée "i", indiquant si ladite valeur mesurée est détectée inférieure à ladite valeur prédéterminée.

L'information "i" issue du comparateur 19 est acheminée vers l'équipement d'extrémité-émission 1" par une voie dite de retour qui peut par exemple être constituée par la même liaison optique 2 (dans le cas où cette liaison est bidirectionnelle) ou, par une liaison distincte, optique ou non optique, pouvant en outre, par exemple, emprunter le réseau commuté.

Dans l'application considérée ici, à un réseau de diffusion point-multipoint, les différentes informations "i" relatives aux différents équipements d'extrémité-réception de ce réseau et notées globalement I sont reçues, dans l'équipement d'extrémité-émission, par un moyen, 20, d'analyse de ces différentes informations en vue de déterminer si au moins l'une d'elles indique que, pour l'équipement d'extrémité-réception correspondant, ladite valeur mesurée a été détectée inférieure à ladite valeur prédéterminée, auquel cas le moyen d'analyse 20 fournit un ordre de commande, noté également C, actif, et utilisé pour augmenter le taux de modulation de l'intensité de la porteuse optique de façon à éviter, ou le cas échéant seulement limiter, les phénomènes de dégradation de qualité de transmission liés à l'effet Brillouin.

Le moyen d'analyse 20, peut, comme le comparateur 17 de l'équipement d'extrémité-émission 1' de la figure 2, faire partie intégrante d'un microprocesseur déjà présent dans cet équipement d'extrémité-émission, pour mettre en oeuvre des tâches de gestion du réseau considéré.

Les autres éléments de l'équipement d'extrémité-réception du système de transmission de la figure 3 sont similaire à ceux de l'équipement d'extrémité-réception du système de transmission représenté sur les figures 1 et 2 et portent en l'occurrence les mêmes références, à savoir 6 pour un moyen de transduction optique-électrique, 7 pour un amplificateur à gain variable, et 8 pour des moyens de traitement.

Le système de transmission représenté sur la figure 3 comporte en outre une liaison optique similaire à celle, 2, du système de transmission représenté sur la figure 1 et un équipement d'extrémité-émission, 1", comportant lui-même des éléments similaires à ceux de l'équipement d'extrémité-émission 1 de la figure 1, et portant en l'occurrence les mêmes références, à savoir 4 pour un moyen de transduction électrique-optique, 5 pour un amplificateur optique, 11 pour un amplificateur à gain réglable, 12 pour un générateur de porteuse auxiliaire et 13 pour un multiplexeur, les éléments 11 et 12 étant en outre commandés par l'ordre de commande C.

Lesdites valeurs prédéterminées, de nombre de porteuses utiles du multiplex modulant la porteuse optique, de grandeur caractéristique du signal représentant ce multiplex (mesurée en émission ou en réception) ou plus généralement de taux de modulation de l'intensité de la porteuse optique, sont par exemple déterminées expérimentalement, en faisant varier le paramètre considéré, en observant à chaque fois le spectre du signal reçu, et en notant la valeur particulière de ce paramètre pour laquelle ce signal reçu est le moins dégradé.

Par exemple, pour un nombre maximum N de porteuses utiles de l'ordre de 30 à 40, et pour un taux de modulation de l'intensité de porteuse optique, exprimé habituellement, dans cette application, par porteuse du multiplex modulant ladite porteuse optique, de l'ordre de 5%, le nombre no pourra être de l'ordre de 8 à 10, pour une liaison optique pouvant atteindre, pour l'équipement d'extrémité-réception le plus éloigné de l'équipement d'extrémité-émission, une longueur de l'ordre de 15 km.

Par ailleurs l'amplificateur à gain réglable 7 de l'équipement d'extrémité-réception sera avantageusement utilisé pour effectuer un contrôle automatique de gain en réception, en présence de variations de taux de modulation de l'intensité de la porteuse optique effectuées suivant la présente invention.

Un système de transmission suivant l'invention comporte en outre avantageusement des moyens pour réduire, si nécessaire, le taux de modulation de l'intensité de la porteuse optique, après que celui-ci ait été augmenté suivant la description faite précédemment.

En effet, par exemple dans l'application considérée ici à un réseau de diffusion point-multipoint, lorsque le nombre de porteuses utiles du multiplex fréquentiel incident devient, ou redevient, suffisant pour que les phénomènes de dégradation de la qualité de transmission liés à l'effet Brillouin ne se produisent plus, une amplification du signal de modulation de la porteuse optique ou une adjonction d'une ou de plusieurs porteuses auxiliaires, n'est plus justifiée et risque même d'entraîner au contraire une nouvelle dégradation de la qualité de transmission, par apparition de produits d'intermodulation dûs à une surmodulation de la porteuse optique et à une non-linéarité des éléments tels que l'amplificateur 11, le transducteur électrique optique 4 et l'amplificateur optique 5.

Dans l'exemple de réalisation illustré sur la figure 1, lesdits moyens pour réduire, si nécessaire, le taux de modulation de l'intensité de la porteuse optique après que celui-ci ait été augmenté, peuvent avoir la même forme de réalisation que les moyens pour augmenter, si nécessaire, ce taux de modulation de l'intensité, tels que décrits en relation avec cette figure 1, mais avec un fonctionnement inverse, à savoir que lorsque le nombre de porteuses utiles du multiplex incident (compté par le scrutateur 9) est détecté supérieur à la valeur limite prédéterminée no (détection assurée par le comparateur 10), l'ordre de commande C devient actif pour entraîner une réduction de gain de l'amplificateur 11 et/ou une suppression de porteuse auxiliaire par l'intermédiaire des éléments 12 et 13.

En ce qui concerne l'exemple de réalisation illustré sur la figure 2, il s'avère en pratique que l'information issue des moyens de mesure 16, qui peut être exploitée, comme on l'a vu, pour détecter si le nombre n de porteuses utiles du multiplex fréquentiel incident est inférieur à une valeur limite prédéterminée no, ne peut pas être exploitée pour détecter si le nombre n est supérieur à no, la valeur mesurée par les moyens de mesure 16 restant en effet sensiblement constante lorsque n augmente à partir d'une valeur égale à no.

Dans ce cas, pour détecter s'il y a lieu de procéder à une réduction du taux de modulation de l'intensité de la porteuse optique, après avoir procédé à une augmentation de ce dernier, on pourra par exemple réduire progressivement, suivant le cas l'amplitude de la porteuse auxiliaire générée par le générateur 12 et/ou le gain de l'amplificateur 11, en observant à chaque fois si l'information obtenue en sortie du comparateur 17 indique bien toujours que la valeur mesurée par les moyens de mesure 16 est supérieure à la valeur limite prédéterminée considérée (étant entendu que dans le cas contraire ce processus de réduction progressive est stoppé), et ce jusqu'à extinction complète de la porteuse auxiliaire et/ou réduction du gain de l'amplificateur 11 compensant totalement son accroissement antérieur.

Ainsi, dans le cas de la figure 2, les moyens pour réduire, si nécessaire, le taux de modulation de l'intensité de la porteuse optique, pourront revêtir sensiblement la même forme de réalisation que les moyens, décrits plus haut, pour augmenter, si nécessaire, ce taux de modulation de l'intensité, à condition de remplacer effectivement, et non plus facultativement, le comparateur 17 par un microprocesseur apte en outre à mettre en oeuvre la séquence décrite ci-dessus de réduction progressive de l'amplitude de la porteuse auxiliaire générée par le générateur 12, et/ou du gain de l'amplificateur 11.

En ce qui concerne l'exemple de réalisation illustré sur la figure 3, lesdits moyens pour réduire, si nécessaire, le taux de modulation de l'intensité de la porteuse optique, après que celui-ci ait été augmenté, pourront être analogues à ceux décrits ci-dessus pour l'exemple de réalisation de la figure 2, à ceci près que le moyen d'analyse 20 est alors effectivement, et non plus facultativement, remplacé par un microprocesseur apte en outre à mettre en oeuvre la séquence de réduction progressive de l'amplitude de la porteuse auxiliaire générée par le générateur 12 et/ou du gain de l'amplificateur 11, ledit microprocesseur tenant alors compte, à chaque étape de ladite séquence de réduction progressive, de l'ensemble des informations "i" issues des différents équipements d'extrémité-réception du réseau considéré, et ladite séquence de réduction progressive étant alors menée jusqu'à son terme à condition que l'ensemble de ces informations "i" l'autorise, ou interrompue lorsqu'une seule au moins de ces informations "i" le nécessite.

Un autre exemple de réalisation desdits moyens pour réduire, si nécessaire, le taux de modulation de l'intensité de la porteuse optique, après que ce dernier ait été augmenté, est maintenant décrit en relation avec la figure 4, à titre d'exemple dans le cas d'un système de transmission du type illustré sur la figure 2.

Suivant l'exemple de réalisation de la figure 4, on détecte s'il y a lieu de réduire le taux de modulation de l'intensité de la porteuse optique, après que ce dernier ait été augmenté, en mesurant, par un moyen de mesure 21, une grandeur caractéristique du signal obtenu en sortie d'un moyen de filtrage 22 permettant de sélectionner une raie d'intermodulation déterminée dans le spectre du signal obtenu en sortie du moyen de transduction optique-électrique 15.

Lorsque le résultat de cette mesure devient supérieur à une valeur limite tolérable, ce qui est détecté par un comparateur (ou un microprocesseur) 17' remplissant en outre les fonctions du comparateur 17, ce comparateur (ou ce microprocesseur) fournit un ordre de commande (noté également C dans le cas où cet ordre de commande est susceptible de prendre deux états opposés) actif pour entraîner une réduction du taux de modulation de l'intensité de la porteuse optique, par l'intermédiaire des éléments 11 et/ou 12, 13, de façon à ce que le résultat de ladite mesure redevienne inférieur à ladite valeur limite tolérable.

Le système de transmission illustré sur la figure 4 comporte, outre les éléments 17', 21 et 22 ainsi décrits, d'autres éléments similaires à ceux déjà décrits pour le système de transmission illustré sur la figure 2, et portant en l'occurrence les mêmes références, à savoir 4, 5, 6, 7, 8, 11, 12, 13, 15, 16.

A titre d'exemple on pourra choisir comme raie d'intermodulation, de préférence à une combinaison de deux porteuses utiles (qui sont en effet susceptibles de disparaître en cas d'interruption des programmes de télévision transmis sur ces porteuses) une combinaison telle que f1p + f2p ou f1p - f2p de deux fréquences dites pilotes, f1p et f2p, transmises en permanence sur le réseau. Ces fréquences pilotes, introduites par exemple par l'intermédiaire du multiplexeur 13, sont utilisées habituellement, par les amplificateurs à gain réglable tels que 7, de préférence au multiplex fréquentiel formé des porteuses utiles modulées, pour effectuer la commande automatique de gain dont il a été question plus haut, car ces fréquences pilotes, non modulées, ont un niveau fixe alors que le niveau du multiplex fréquentiel formé des porteuses utiles modulées varie en permanence en fonction des informations transmises.

Ces fréquences pilotes sont habituellement choisies l'une en deça de la bande utile occupée par le multiplex fréquentiel formé de l'ensemble des portesues utiles modulées, l'autre au delà de cette bande utile, afin de réaliser ladite commande automatique de gain sur toute cette bande utile.

Dans le cas où une seule fréquence pilote, par exemple f1p, serait prévue, on s'intéresserait par exemple, pour détecter s'il y a lieu de réduire le taux de modulation de l'intensité de la porteuse optique, après que ce dernier ait été augmenté, à un harmonique de cette fréquence pilote, par exemple l'harmonique 2, 2f1p.

Dans le cas où aucune fréquence pilote ne serait prévue, on s'intéresserait par exemple à une raie d'intermodulation résultant du battement de porteuses utiles, et de préférence d'un nombre élevé de tels battements, afin d'éviter le plus possible la disparition de cette raie d'intermodulation en cas de disparition de porteuses utiles liée à une interruption de programmes transmis sur ces porteuses.

Bien que la présente invention ait été plus particulièrement décrite dans le cadre de son application aux réseaux câblés de vidéocommunication, cette invention n'est pas limitée à une telle application. Ainsi, suivant le type d'application envisagé, et en l'absence de normes contraires, d'autres solutions pourraient être envisagées pour augmenter le taux de modulation de l'intensité de la porteuse optique, telles que, d ans le cas où le signal de modulation de la porteuse optique est lui-même un signal modulé en amplitude, une augmentation du taux de modulation de l'intensité de ce signal de modulation.

De même l'invention s'appliquerait aussi bien dans le cas d'un signal de modulation de la porteuse optique, non sujet à des variations susceptibles d'entraîner momentanément une baisse du taux de modulation de l'intensité de cette porteuse optique, mais qui serait en permanence tel que ce taux de modulation de l'intensité serait insuffisant pour permettre d'éviter, ou de limiter, les phénomènes de dégradation de qualité de transmission liés à l'effet Brillouin.

Par ailleurs l'invention est également applicable à un système de transmission dans lequel la porteuse optique modulée par le signal porteur des informations à transmettre, est modulée non pas en intensité, mais en fréquence ou en phase, ce type de modulation étant aussi dit à enveloppe constante ou encore à intensité optique constante.

Dans les mêmes conditions que celles décrites précédemment pour le cas d'une modulation d'intensité, c'est-à-dire dans le cas où l'effet Brillouin fait dégrader la qualité des signaux reçus, une modulation d'intensité est alors appliquée, en plus de ladite modulation de fréquence ou de phase, et le taux de modulation de l'intensité en résultant éventuellement augmenté, afin de repousser le seuil de Brillouin.

Le signal modulant en intensité la porteuse optique peut alors être quelconque (par exemple un signal à une fréquence située en dehors du spectre du signal porteur des informations à transmettre).

Pour regrouper ces différents cas d'application, on indiquera que le taux de modulation de l'intensité de la porteuse optique est, suivant l'invention, augmenté, si nécessaire, éventuellement à partir de la valeur nulle dans le cas où la porteuse optique est modulée par une modulation autre que d'intensité par le signal porteur des informations à transmettre.

## Revendications

1. Système de transmission sur une liaison optique, par modulation d'une porteuse optique, notamment pour réseau câblé de vidéocommunication, comportant des moyens (9, 10, 11, 12, 13 - 11, 12, 13, 14, 15, 16, 17 - 11, 12, 13, 18, 19,20) pour augmenter le taux de modulation de l'intensité de la porteuse optique s'il apparaît des phénomènes de dégradation de la qualité de transmission liés à l'effet Brillouin, **caractérisé** en ce que lesdits moyens pour augmenter le taux de modulation de l'intensité de la porteuse optique comportent des moyens (9, 10 - 15, 16, 17 - 18, 19), dits de détection, pour détecter une baisse du taux de modulation de l'intensité de la porteuse optique, et des moyens pour augmenter ce taux de modulation de l'intensité, en réponse à une telle détection.

2. Système selon la revendication 1, caractérisé en ce que lesdits moyens de détection (9, 10 - 15, 16, 17 - 18, 19) sont des moyens pour détecter si le taux de modulation de l'intensité de la porteuse optique devient inférieur à une valeur limite prédéterminée, en deça de laquelle se produit l'effet Brillouin.

3. Système selon l'une des revendications 1 à 2, caractérisé en ce que lesdits moyens pour augmenter le taux de modulation de l'intensité de la porteuse optique comportent des moyens (11) pour amplifier le signal de modulation de ladite porteuse optique.

4. Système selon l'une des revendications 1 à 2, caractérisé en ce que le signal de modulation de ladite porteuse optique étant lui-même un multiplex fréquentiel (MF) comportant une pluralité de porteuses, dites utiles, modulées respectivement par différents signaux porteurs de différentes informations à transmettre simultanément sur ce système, lesdits moyens pour augmenter le taux de modulation de l'intensité de la porteuse optique comportent des moyens (12, 13) pour adjoindre une ou plusieurs porteuses, dites auxiliaires, audit multiplex.

5. Système selon la revendication 4, caractérisé en ce que ladite ou lesdites porteuses auxiliaires sont déterminées de façon à ce que cette ou ces porteuses auxiliaires ainsi que les produits d'intermodulation de cette ou ces porteuses auxiliaires et des porteuses utiles tombent en dehors des canaux fréquentiels occupés par l'ensemble des porteuses utiles modulées transmissibles sur le réseau considéré.

6. Système selon l'une des revendications 2 à 5, caractérisé en ce que lesdits moyens de détection comportent des moyens (16, 18) de mesure de grandeur caractéristique du signal de modulation de ladite porteuse optique, et des moyens (17, 19) de comparaison du résultat de cette mesure à une valeur limite prédéterminée en deçà de laquelle se produit l'effet Brillouin.

7. Système selon la revendication 6, comportant, en réception, un moyen de transduction optique-électrique (6) restituant un signal correspondant au signal de modulation de ladite porteuse optique, caractérisé en ce que lesdits moyens de mesure (18) opèrent sur le signal restitué par ledit moyen de transduction optique-électrique.

8. Système selon la revendication 6, caractérisé en ce que lesdits moyens de mesure (16) opèrent sur le signal de modulation de ladite porteuse optique, restitué par un moyen de transduction optique-électrique (15) prévu en émission et opérant lui-même sur le signal optique prélevé par un moyen (14) de prélèvement d'une partie de la puissance optique d'émission.

9. Système selon l'une des revendications 2 à 5, caractérisé en ce que le signal de modulation de ladite porteuse optique étant un multiplex fréquentiel (MF) comportant une pluralité de porteuses, dites utiles, modulées respectivement par différents signaux porteurs de différentes informations à transmettre simultanément sur ce système, lesdits moyens de détection comportent des moyens (9) pour compter le nombre de porteuses utiles dudit multiplex et des moyens de comparaison (10) du résultat de ce comptage à une valeur limite prédéterminée en deça de laquelle se produit l'effet Brillouin.

10. Système selon l'une des revendications 1 à 9, caractérisé en ce qu'il comporte des moyens (9, 10, 11, 12, 13 - 11, 12, 13, 14, 15, 16, 17 - 11, 12, 13, 18, 19, 20 - 11, 12, 13, 14, 15, 17, 21, 22) pour réduire le taux de modulation de l'intensité de la porteuse optique, après que celui-ci ait été augmenté.

11. Système selon la revendication 10, caractérisé en ce que, le signal de modulation de ladite porteuse optique étant un multiplex fréquentiel (MF) comportant une pluralité de porteuses, dites utiles, modulées respectivement par différents signaux porteurs de différentes informations à transmettre simultanément sur ce système, lesdits moyens pour réduire le taux de modulation de l'intensité de la porteuse optique, après que celui-ci ait été augmenté, comportent des moyens (9) pour compter le nombre de porteuses utiles dudit multiplex, des moyens de comparaison (10) du résultat de ce comptage à une valeur limite prédéterminée en deça de laquelle se produit l'effet Brillouin, et des moyens (11, 12, 13) pour réduire le taux de modulation de l'intensité de la porteuse optique lorsque lesdits moyens de comparaison détectent que ledit résultat de comptage devient supérieur à ladite valeur limite prédéterminée.

12. Système selon la revendication 10, caractérisé en ce que lesdits moyens pour réduire le taux de modulation de l'intensité de la porteuse optique, après que celui-ci ait été augmenté, comportent des moyens (16) de mesure de grandeur caractéristique du signal de modulation de ladite porteuse optique, des moyens (17) de comparaison du résultat de cette mesure à une valeur limite prédéterminée en deçà de laquelle se produit l'effet Brillouin, et des moyens (11, 12, 13) pour réduire progressivement le taux de modulation de l'intensité de la porteuse optique et pour détecter à chaque fois si lesdits moyens de comparaison détectent bien le résultat de ladite mesure supérieur à ladite valeur limite prédéterminée, auquel cas ladite réduction progressive est poursuivie jusqu'à son terme, cette réduction progressive étant stoppée dans le cas contraire.

13. Système selon la revendication 10, caractérisé en ce que lesdits moyens pour réduire le taux de modulation de l'intensité de la porteuse optique, après que celui-ci ait été augmenté, comportent des moyens (21) de mesure de grandeur caractéristique du signal correspondant à une raie d'intermodulation ou a un harmonique sélectionné, par un moyen de filtrage (22), dans le spectre du signal de modulation de la porteuse optique, des moyens (17') pour détecter si le résultat de ladite mesure devient supérieur à une valeur limite tolérable, et des moyens (11, 12, 13) pour réduire le taux de modulation de l'intensité de la porteuse optique lorsque le résultat de cette mesure devient supérieur à ladite valeur limite tolérable.

## Patentansprüche

1. System zur Übertragung auf einer optischen Verbindung durch Modulation eines optischen Trägers, insbesondere für ein Bildkommunikationskabelnetz, umfassend Mittel (9, 10, 11, 12, 13 - 11, 12, 13, 14, 15, 16, 17 - 11, 12, 13, 18, 19, 20) zur Erhöhung des Modulationsgrades der Intensität des optischen Trägers, wenn mit dem Brillouin-Effekt zusammenhängende Erscheinungen der Verschlechterung der Übertragungsqualität auftreten, dadurch gekennzeichnet, daß die Mittel zur Erhöhung des Modulationsgrades der Intensität des optischen Trägers sogenannte Erkennungsmittel (9, 10 - 15, 16, 17 - 18, 19) zur Erkennung eines Absinkens des Modulationsgrades der Intensität des optischen Trägers und Mittel zur Erhöhung dieses Modulationsgrades der Intensität in Antwort auf eine solche Erkennung umfassen.

2. System nach Anspruch 1, dadurch gekennzeichnet, daß die Erkennungsmittel (9, 10 - 15, 16, 17 - 18, 19) Mittel sind, um festzustellen, ob der Modulationsgrad der Intensität des optischen Trägers kleiner als ein vorbestimmter Grenzwert wird, bis zu dem der Brillouin-Effekt auftritt.

3. System nach einem der Ansprüche 1 bis 2, dadurch gekennzeichnet, daß die Mittel zur Erhöhung des Modulationsgrades der Intensität des optischen Trägers Mittel (11) zur Verstärkung des Modulationssignals des optischen Trägers umfassen.

4. System nach einem der Ansprüche 1 bis 2, dadurch gekennzeichnet, daß das Modulationssignal des optischen Trägers selbst ein Frequenzmultiplex (MF) ist, das eine Mehrzahl von sogenannten Nutzträgern umfaßt, die jeweils durch verschiedene Trägersignale für verschiedene, gleichzeitig über dieses System zu übertragende Informationen moduliert werden, wobei die Mittel zur Erhöhung des Modulationsgrades der Intensität des optischen Trägers Mittel (12, 13) zur Hinzufügung eines oder mehrerer sogenannter Hilfsträger zum Multiplex umfassen.

5. System nach Anspruch 4, dadurch gekennzeichnet, daß der oder die Hilfsträger so bestimmt sind, daß der oder die Hilfsträger sowie die Intermodulationsprodukte dieses oder dieser Hilfsträger und der Nutzträger aus den Frequenzkanälen herausfallen, die von der Gesamtheit der über das betrachtete Netz übertragbaren modulierten Nutzträger besetzt sind.

6. System nach einem der Ansprüche 2 bis 5, dadurch gekennzeichnet, daß die Erkennungsmittel Mittel (16, 18) zur Messung einer Kenngröße des Modulationssignals des optischen Trägers und Mittel (17, 19) umfassen, um das Ergebnis dieser Messung mit einem vorbestimmten Grenzwert zu vergleichen, bis zu dem der Brillouin-Effekt auftritt.

7. System nach Anspruch 6, das empfangsseitig ein Mittel zur optoelektronischen Wandlung (6) umfaßt, das ein Signal wiederherstellt, welches dem Modulationssignal des optischen Trägers entspricht, dadurch gekennzeichnet, daß die Meßmittel (18) an dem durch das Mittel zur optoelektronischen Wandlung wiederhergestellten Signal wirken.

8. System nach Anspruch 6, dadurch gekennzeichnet, daß die Meßmittel (16) an dem Modulationssignal des optischen Trägers wirken, das durch ein Mittel zur optoelektronischen Wandlung (15) wiederhergestellt wird, welches sendeseitig vorgesehen ist und seinerseits an dem optischen Signal wirkt, das durch ein Mittel (14) zur Entnahme eines Teils der optischen Sendeleistung entnommen wird.

9. System nach einem der Ansprüche 2 bis 5, dadurch gekennzeichnet, daß das Modulationssignal des optischen Trägers ein Frequenzmultiplex (MF) ist, das eine Mehrzahl von sogenannten Nutzträgern umfaßt, die jeweils durch verschiedene Trägersignale für verschiedene, gleichzeitig über dieses System zu übertragende Informationen moduliert werden, und die Erkennungsmittel Mittel (9) zur Zählung der Zahl der Nutzträger dieses Multiplexes und Mittel (10) umfassen, um das Ergebnis dieser Zählung mit einem vorbestimmten Grenzwert zu vergleichen, bis zu dem der Brillouin-Effekt auftritt.

10. System nach einem der Ansprüche 1 bis 9, dadurch gekennzeichnet, daß es Mittel (9, 10, 11, 12, 13 - 11, 12, 13, 14, 15, 16, 17 - 11, 12, 13, 18, 19, 20 - 11, 12, 13, 14, 15, 17, 21, 22) umfaßt, um den Modulationsgrad der Intensität des optischen Trägers zu verringern, nachdem dieser erhöht worden ist.

11. System nach Anspruch 10, dadurch gekennzeichnet, daß das Modulationssignal des optischen Trägers ein Frequenzmultiplex (MF) ist, das eine Mehrzahl von sogenannten Nutzträgern umfaßt, die jeweils durch verschiedene Trägersignale für verschiedene, gleichzeitig über dieses System zu übertragende Informationen moduliert werden, und die Mittel, um den Modulationsgrad der Intensität des optischen Trägers zu verringern, nachdem dieser erhöht worden ist, Mittel (9) zur Zählung der Zahl der Nutzträger dieses Multiplexes, Mittel zum Vergleich (10) des Ergebnisses dieser Zählung mit einem vorbestimmten Grenzwert, bis zu dem der Brillouin-Effekt auftritt, und Mittel (11, 12, 13) umfassen, um den Modulationsgrad der Intensität des optischen Trägers zu verringern, wenn die Vergleichsmittel erkennen, daß das Ergebnis der Zählung größer als der vorbestimmte Wert wird.

12. System nach Anspruch 10, dadurch gekennzeichnet, daß die Mittel, um den Modulationsgrad der Intensität des optischen Trägers zu verringern, nachdem dieser erhöht worden ist, Mittel (16) zur Messung einer Kenngröße des Modulationssignals dieses optischen Trägers, Mittel (17) zum Vergleich des Ergebnisses dieser Messung mit einem vorbestimmten Grenzwert, bis zu dem der Brillouin-Effekt auftritt, und Mittel (11, 12, 13) umfassen, um den Modulationsgrad der Intensität des optischen Trägers schrittweise zu verringern und um jedesmal festzustellen, ob die Vergleichsmittel das Ergebnis dieser Messung tatsächlich als größer als dieser vorbestimmte Grenzwert erkennen, wobei in diesem Fall die schrittweise Verringerung bis zu ihrem Ende fortgesetzt wird, wobei diese schrittweise Verringerung im umgekehrten Fall abgebrochen wird.

13. System nach Anspruch 10, dadurch gekennzeichnet, daß die Mittel, um den Modulationsgrad der Intensität des optischen Trägers zu verringern, nachdem dieser erhöht worden ist, Mittel (21) zur Messung einer Kenngröße des Signals, das einer Intermodulationslinie oder einer durch ein Filtermittel (22) in dem Spektrum des Modulationssignals des optischen Trägers ausgewählten Harmonischen entspricht, Mittel (17'), um festzustellen, ob das Ergebnis dieser Messung größer als ein zulässiger Grenzwert wird, und Mittel (11, 12, 13) umfassen, um den Modulationsgrad der Intensität des optischen Trägers zu verringern, wenn das Ergebnis dieser Messung größer als der zulässige Grenzwert wird.

## Claims

1. System for transmission on an optical link by modulating an optical carrier suitable for videocommunication cable networks including means (9, 10, 11, 12, 13 - 11, 12, 13, 14, 15, 16, 17 - 11, 12, 13, 18, 19, 20) for increasing the intensity modulation of the optical carrier if phenomena associated with the Brillouin effect degrading transmission quality occur, characterised in that said means for increasing the intensity modulation of the optical carrier include detector means (9, 10 - 15, 16, 17 - 18, 19) for detecting reduction of the intensity modulation of the optical carrier and means for increasing the intensity modulation in response to such detection.

2. System according to claim 1 characterised in that said detector means (9, 10 - 15, 16, 17 - 18, 19) are means for detecting if the modulation of the optical carrier falls below a predetermined limit value less than that at which the Brillouin effect occurs.

3. System according to claim 1 or claim 2 characterised in that said means for increasing the modulation of the optical carrier comprise means (11) for amplifying the signal modulating said optical carrier.

4. System according to claim 1 or claim 2 characterised in that the signal modulating said optical carrier being itself a frequency multiplex (MF) comprising a plurality of active carriers modulated by respective different signals conveying different information to be transmitted simultaneously over said system, said means for increasing the modulation of the optical carrier comprise means (12, 13) for adding one or more auxiliary carriers to said multiplex.

5. System according to claim 4 characterised in that said auxiliary carrier(s) are such that they and the intermodulation products of them and the active carriers fall outside the frequency channels occupied by all modulated active carriers that can be transmitted over the network.

6. System according to any one of claims 2 to 5 characterised in that said detector means comprise means (16, 18) for measuring a magnitude characteristic of the signal modulating said optical carrier and means (17, 19) for comparing the result of said measurement with a predetermined limiting value below which the Brillouin effect occurs.

7. System according to claim 6 comprising at the receiving end optical-electrical transducer means (6) outputting a signal corresponding to the signal modulating said optical carrier characterised in that said measuring means (18) operate on the signal output by said optical-electrical transducer means.

8. System according to claim 6 characterised in that said measuring means (16) operate on the signal modulating said optical carrier output by optical-electrical transducer means (15) provided at the sending end and operating on the optical signal sampled by means (14) for sampling part of the input optical power.

9. System according to any one of claims 2 to 5 characterised in that the signal modulating said optical carrier being a frequency multiplex (MF) comprising a plurality of active carriers modulated by respective different signals conveying different information to be transmitted simultaneously over said system, said detector means comprise means (9) for counting the number of active carriers of said multiplex and means (10) for comparing the result of said count with a predetermined limiting value below which the Brillouin effect occurs.

10. System according to any one of claims 1 to 9 characterised in that it comprises means (9, 10, 11, 12, 13 - 11, 12, 13, 14, 15, 16, 17 - 11, 12, 13, 18, 19, 20 - 11, 12, 13, 14, 15, 17, 21, 22) for reducing the modulation of the optical carrier after it has been increased.

11. System according to claim 10 characterised in that, the signal modulating said optical carrier being a frequency multiplex (MF) comprising a plurality of active carriers modulated by respective different signals conveying different information to be transmitted simultaneously over said system, said means for reducing the modulation of the optical carrier after it has been increased comprise means (9) for counting the number of active carriers of said multiplex, means (10) for comparing the result of said count with a predetermined limiting value below which the Brillouin effect occurs, and means (11, 12, 13) for reducing the modulation of the optical carrier when said comparator means detect that the result of said count becomes less than said predetermined limiting value.

12. System according to claim 10 characterised in that said means for reducing the modulation of the optical carrier after it has been increased comprise means (16) for measuring a magnitude characteristic of the signal modulating said optical carrier, means (17) for comparing the result of said measurement with a predetermined limiting value below which the Brillouin effect occurs, and means (11, 12, 13) for progressively reducing the modulation of the optical carrier and for detecting each time if said comparator means detect the result of said measurement greater than said predetermined limiting value, in which case said progressive reduction is continued until completed, said progressive reduction being stopped otherwise.

13. System according to claim 10 characterised in that said means for reducing the modulation of the optical carrier, if necessary, after it has been increased comprise means (21) for measuring a magnitude characteristic of the signal corresponding to an intermodulation product or a harmonic selected by filter means (22) in the spectrum of the signal modulating the optical carrier, means (17') for detecting if the result of said measurement is greater than a tolerable limiting value, and means (11, 12, 13) for reducing the modulation of the optical carrier if the result of said measurement becomes greater than said tolerable limiting value.
